Europäisches Patentamt

(19) European Patent Office

Office européen des brevets

(11) Veröffentlichungsnummer: **0 070 292**
**B1**

(12) EUROPÄISCHE PATENTSCHRIFT

(45) Veröffentlichungstag der Patentschrift:
03.07.85

(21) Anmeldenummer: 82900347.4

(22) Anmeldetag: 27.01.82

(86) Internationale Anmeldenummer:
PCT/DE 82/00016

(87) Internationale Veröffentlichungsnummer:
WO 82/02502 (05.08.82 Gazette 82/19)

(51) Int. Cl.⁴: **B 07 B 1/24,** B 03 B 9/06,
B 02 C 18/40

(54) SIEBTROMMEL FÜR MÜLL.

(30) Priorität: 29.01.81 DE 3102846

(43) Veröffentlichungstag der Anmeldung:
26.01.83 Patentblatt 83/4

(45) Bekanntmachung des Hinweises auf die Patenterteilung:
03.07.85 Patentblatt 85/27

(84) Benannte Vertragsstaaten:
AT BE CH DE FR GB LI LU NL SE

(56) Entgegenhaltungen:
EP - A - 0 008 621
DE - A - 2 436 543
FR - A - 2 376 703
US - A - 2 241 977
US - A - 3 405 873

(73) Patentinhaber: MANNESMANN VEBA
UMWELTTECHNIK GMBH, Südstrasse 41,
D-4690 Herne 2 (DE)

(72) Erfinder: RIEMANN, Hanns-Helmut,
Schattbachstrasse 26, D-4630 Bochum (DE)
Erfinder: SONNENSCHEIN, Hans, Hatzperbogen 48,
D-4300 Essen (DE)
Erfinder: SKALETZ, Heinz, Kölner Strasse 116,
D-4350 Recklinghausen (DE)

(74) Vertreter: Meissner, Peter E., Dipl.-Ing., Patentanwälte
Dipl.-Ing. Peter E. Meissner Dipl.-Ing. Hans-Joachim
Presting Herbertstrasse 22, D-1000 Berlin 33 (DE)

**Beschreibung**

Die Erfindung betrifft eine Siebtrommel mit radial an der Trommelinnenseite angeordneten, dreieckförmigen Aufprallblechen zur Vorzerkleinerung des Mülls und mit mindestens einer im Trommelinneren angeordneten Staueinrichtung.

Aus der EP-A 8621 ist eine Trommelsiebmaschine mit den obigen Merkmalen bekannt, wobei als Staueinrichtung im Inneren der Trommel ein Flügelrad vorgesehen ist. Hierdurch soll eine möglichst weitgehende Zerkleinerung der Müllbestandteile erreicht werden.

Darüberhinaus ist es bekannt, dem Trommelinnenraum einen bestimmten, und zwar polygonalen Querschnitt zu geben, um hierdurch bei einer unstetigen Materialbewegung eine bessere Durchmischung zu erreichen.

Der Erfindung liegt die Aufgabe zugrunde bei einer Siebtrommel der eingangs genannten Art, die Vorzerkleinerung weiter zu beeinflussen, um den Überlaufanteil zu verringern. Damit wird einmal bezweckt, die mit hohem Energieverbrauch betriebene Mühle zu entlasten. Zum anderen soll vor allem der Glasanteil der Mühlenaustragsmenge verringert werden; denn bis zur Splittergrösse kleingemahlenes Glas lässt sich bei der weiteren Behandlung des Mengenstromes nur mit unverhältnismässig hohem Aufwand heraustrennen.

Gelöst wird diese Aufgabe erfindungsgemäss mit den im Patentanspruch 1 angegebenen Merkmalen.

Vorzugsweise Ausgestaltungen ergeben sich aus den Unteransprüchen.

Die Staueinrichtungen in der Trommel verhindern einen zu schnellen Durchgang des Mülls und bewirken dessen mehrmaliges Fallen vom oberen in den unteren Teil der Trommel. Weiterhin besitzt die Siebtrommel einen Durchmesser, der ausreicht, den bei der Drehung der Trommel in deren oberen Teil mitgeführten zerkleinerbaren Müllanteilen beim anschliessenden Fall in den unteren Teil der Trommel eine Geschwindigkeit zu geben, die zur Zerkleinerung der zerbrechlichen Müllteile beim Auftreffen auf der Trommelwand und insbesondere den Aufprallblechen führt. Hierzu reichen in der Regel Trommeldurchmesser von 2 m bis 4 m aus; für kommunalen Müll hat sich ein Durchmesser von etwa 3 m als geeignet erwiesen.

Die Führung des Mülls in den oberen Teil der Siebtrommel während deren Drehung kann durch axial angebrachte Mitnehmerbleche bewirkt werden. Da an diesen sich aber leicht Müllklein ansetzt, der die Mitführung weiteren Mülls behindert, wird diese bevorzugt durch eine relativ schnelle Drehung der Siebtrommel erreicht. Es wurde nämlich gefunden, dass Drehgeschwindigkeiten der Trommel, bei denen die Zentrifugalbeschleunigung am Trommelmantel 5/10 bis 7/10 der Fallbeschleunigung beträgt, insbesondere zusammen mit dem später erwähnten polygonalen Queschnitt der Trommel zu einem sehr steilen Müllspiegel in der Siebtrommel und damit zu den grösstmöglichen Fallhöhen für den Müll in der Trommel führen. Bei dem oben genannten Trommeldurchmesser von 3 m kann die Siebtrommel z.B. mit 15 U/min betrieben werden.

Die aufrechtstehenden Aufprallbleche zerkleinern zwar sprödes Material wie Steinzeug und Flaschen, aber sie sollen auch die allgemein aus Folie bestehenden Mülltüten und Müllsäcke aufreissen. Dazu erhält ihre Oberkante zweckmässig eine Sägeblattkontur. Durch ein Ansteigen dieser Sägeblattkontur zur Trommelachse hin, wobei der niedrige Teil in der Drehrichtung voranläuft, wird die Mitnehmerwirkung der Aufprallbleche kleingehalten, damit sich die Flanken der Zähne nicht mit Müllklein zusetzen.

Der Müllspiegel in der Siebtrommel soll möglichst steil sein, damit stückige Teile vorwiegend in den Zustand freien Falls versetzt werden. Dafür ist neben der bereits beschriebenen Trommeldrehzahl der Querschnitt des Trommelmantels wesentlich. Er sollte die Form eines Polygons, insbesondere die eines Achtecks aufweisen.

Die Staueinrichtungen in der Siebtrommel sollen bei geringem Bauaufwand eine ausreichend grosse Durchtrittsöffnung für den Müll freigeben. Sie können auch der Queraussteifung des Trommelmantels dienen. Hierfür werden sie nach einer Weiterentwicklung der Erfindung bei einer Achtecktrommel durch vier rechteckige Bleche gebildet, deren eine Seite gleich der Achteckseite (s), an der sie befestigt ist, und deren andere Seite gleich der Kathetenlänge $(s\sqrt{2})$ des rechtwinkligen, gleichschenkligen Dreiecks über der benachbarten Achteckseite ist. Die vier Bleche sind an vier nicht aneinanderstossenden Seiten des Achteckes befestigt und lassen eine grosse quadratische und vier kleine dreieckige Durchtrittsöffnungen für den Müll. Durch Verbinden ihrer aneinanderstossenden Spitzen, z.B. durch Schweissen, wird der Trommelmantel versteift.

Um bei geringstmöglicher Störung des Müllspiegels eine gute Zerkleinerungswirkung zu erhalten, hat es sich als zweckmässig herausgestellt, die Teilungsabstände der Aufprallbleche gleich der doppelten Breite der Polygonseite zu machen (2s), die Aufprallbleche also auf jeder zweiten Polygonseite anzubringen, und die Reihe der Aufprallbleche etwa zwei Schraubenwindungen weit zu führen, also etwa so viele Aufprallbleche vor jeder Staueinrichtung anzuordnen, wie das Polygon Seiten besitzt. Die Länge der Aufprallbleche sollte gleich der halben Breite der Polygonseite (s/2), ihre Höhe gleich einem Viertel der Polygonseite sein (s/4).

In den Zeichnungen ist die Erfindung an einem Ausführungsbeispiel dargestellt. Die im weiteren erläuterten Zeichnungen zeigen mit

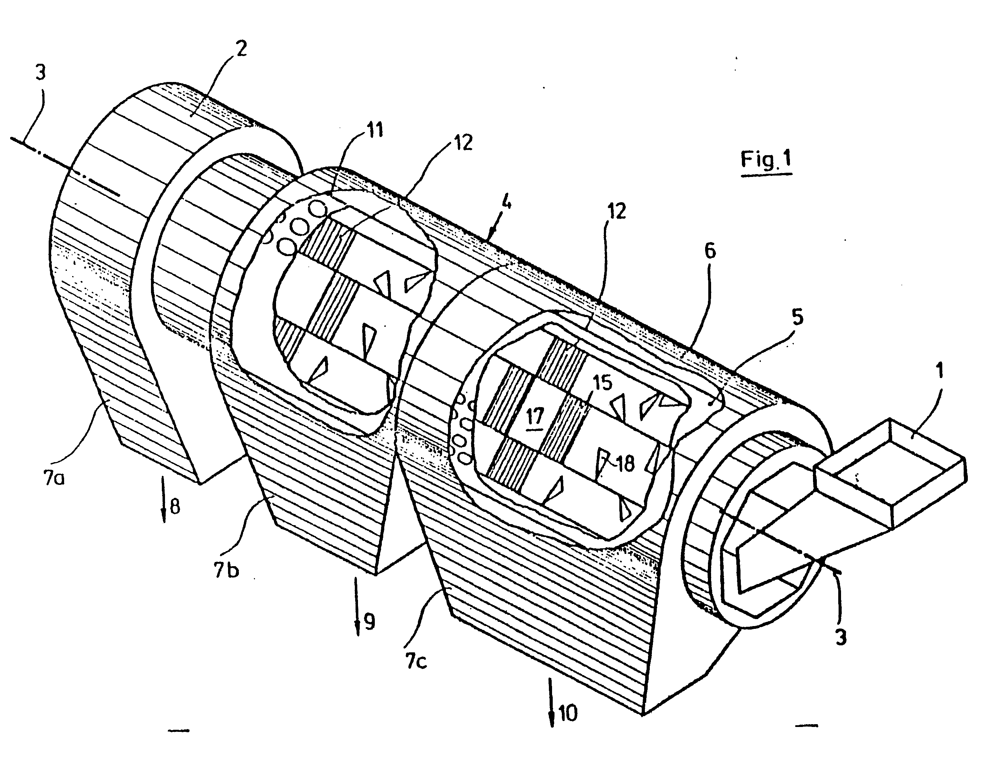

Fig. 1 eine Siebtrommel für Müll mit drei Austragungstrichtern, räumlich gezeichnet und mit teilweisem Wanddurchbruch,

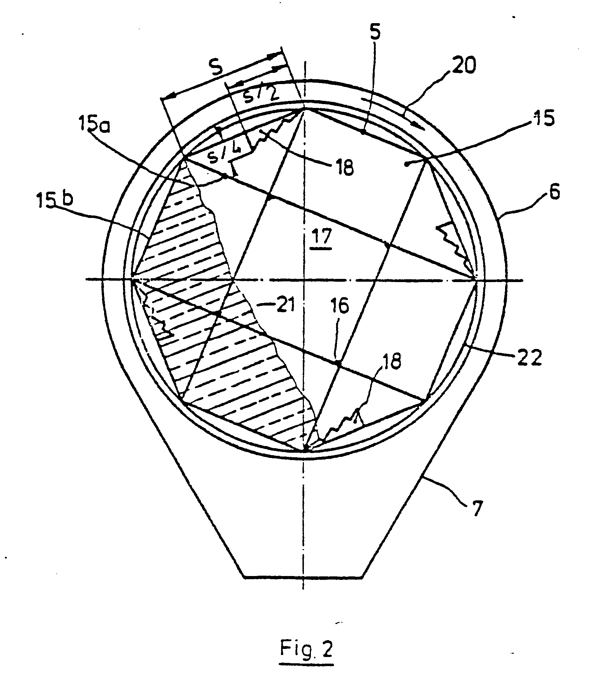

Fig. 2 die Siebtrommel nach Fig. 1 im Querschnitt und

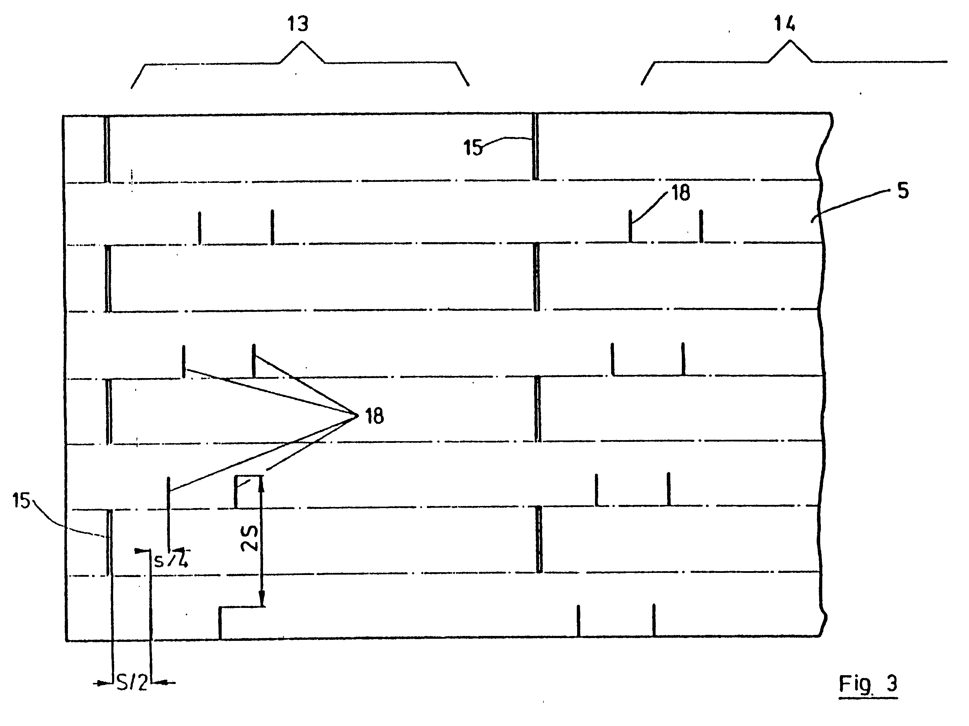

Fig. 3 eine Abwicklung des Trommelmantels entsprechend dem Querschnitt nach Fig. 2.

Eine sich längs einer vom Mülleintrag 1 zum Überlaufaustrag 2 hin geneigten Systemachse 3 erstreckende Siebtrommel 4 hat einen drehbaren, achteckigen Trommelmantel 5, der von einem feststehenden, im wesentlichen zylindrischen Gehäuse 6 gekapselt ist. Die Siebtrommel wird über den Laufring 22 angetrieben und geführt. Das Gehäuse des Überlaufaustrags 2 läuft nach unten hin in einen Austragstrichter 7a aus. Zwei weitere Austragstrichter 7b und 7c, die nach vorn zunehmend länger sind, ergeben, wie durch Pfeile angedeutet ist, eine Grobfraktion 8, eine Mittelfraktion 9 und eine Feinfraktion 10. Die Sieblöcher 11 des Trommelmantels 5 sind im Bereich des Austragstrichters 7b weiter als die Löcher im Bereich des Austragstrichters 7c.

Entsprechend ist die Trommellänge durch zwei Staueinrichtungen 12 in zwei Staustrecken 13 und 14 unterteilt. Die Staueinrichtungen werden gebildet aus je vier Rechteckblechen 15, deren eine Seite 15b gleich der Breite der Achteckseite s und deren andere Seite 15a gleich der Kathetenlänge des rechtwinkligen, gleichschenkligen Dreiecks über der benachbarten Achteckseite s ist. Die symbolisch als Schweisspunkte markierten Stossstellen 16 der Bleche weisen aus, dass zentrisch eine quadratische Durchtrittsöffnung 17 freigelassen wird, und dass die Bleche 15 den Trommelmantel diagonal aussteifen.

Beginnend mit dem Abstand s/2 von den Rechteckblechen 15 entwickeln sich in den beiden Staustrecken 13 und 14 zwei Schraubenwindungen als unterbrochene Reihe von Aufprallblechen 18. Der axiale Abstand s/4 der Aufprallbleche untereinander ist gleich einem Viertel und der Teilungsabstand 2s gleich der doppelten Achteckseite s. Die so gebildete zweifache Schraubenlinie ist etwa halb so lang wie die Länge der Staustrecke.

Die Oberkante der Aufprallbleche 18 hat eine grobe Sägeblattkontur. Sie steigt zur Trommelachse 3 hin an. Der niedrigere Teil der Kontur läuft in der Drehrichtung 20 der Trommel voraus.

In der Achtecktrommel mit einem Durchmesser von etwa 3 m entsteht bei einer verhältnissmässig hohen Betriebsdrehzahl von 15 U/min ein verhältnismässig steiler Müllspiegel 21. Auch der Achteckquerschnitt der Trommel begünstig wegen besserer Mitnehmereigenschaft die Steilheit des Müllspiegels mehr als ein zylindrischer Querschnitt. Bei Drehgeschwindigkeiten von etwa 18 U/min erreicht der freie Fall bei steilem Müllspiegel 21 seine grösste Höhendifferenz und Wirkung. Unterhalb etwa 12 U/min ist einerseits der Müllspiegel so wenig steil und andererseits die Fallhöhendifferenz so klein, dass feste Gegenstände wie Flaschen ziemlich energielos auf dem Müllspiegel herabrollen und nicht zerkleinert werden.

Der Trommeldurchmesser ist mit etwa drei Meter für ein Trommelsieb ebenfalls relativ gross. Ein Müllsack beispielsweise fällt verhältnismässig hoch frei herab, um beim Aufprall auf die momentane Unterfläche der Trommel aufzuplatzen und/oder durch die mit der Sägeblattkontur versehenen Aufprallbleche 18 aufgerissen zu werden, vielleicht nicht stets beim ersten Mal, aber mit Sicherheit nach mehrmaligem Fallen. Entsprechendes gilt für Glasflaschen oder leicht brechbares Steinzeug.

Hierzu ist wesentlich, dass die Aufprallbleche 18 eine relativ schlechte Mitnehmerfunktion ausüben. Dazu sind sie niedrig und steigt die Sägeblattkontur 19 zur Trommelachse hin an. Die Aufprallbleche sollen sich in der Zenitlage leicht von anhaftendem Kleinzeug befreien können, um die herabfallenden Gegenstände metallisch hart aufzufangen. Auch der relativ grosse Abstand der Aufprallbleche untereinander verringert die Mitnehmerwirkung. Andererseits soll der Abstand nicht zu gross sein, um über den Umfang der Trommel ausreichende Aufprallwahrscheinlichkeit zu haben.

Die beschriebene Anordnung der Aufprallbleche 18 nur in der Nähe der Staueinrichtungen 12 berücksichtigt, dass ein grosser Teil des langsam axial fortschreitenden Mengenstromes vor dem Erreichen des Aufprallblechbereiches schon durch die Sieblöcher 11 hindurchfällt. In diesem der Staueinrichtung vorgelagerten Bereich findet nämlich der Hauptstau statt, während der Bereich unmittelbar hinter der Staueinrichtung eher als Auflockerungszone bezeichnet werden kann. So z.B. fallen Flaschenhälse und -böden, wenn sie von der Staustrecke 14 durch die quadratische Öffnung 17 und durch die vier dreieckigen Öffnungen an der Peripherie hindurch in die Staustrecke 13 hinüberwechseln, schon bald durch die in der Staustrecke 13 grösseren Sieblöcher hindurch.

Der Überlaufanteil 8 sollte im wesentlichen nur aus Stückzeug wie Papier, Kartons, Konservendosen und Kunststoffgegenständen bestehen, das wegen der hier begrenzten Bedingungen des freien Falls nicht zerkleinerbar ist.

**Patentansprüche**

1. Siebtrommel für Müll mit radial an der Trommelinnenseite angeordneten, dreieckförmigen Aufprallblechen (18) zur Vorzerkleinerung des Mülls und mit mindestens einer im Trommelinneren angeordneten Staueinrichtung (12), dadurch gekennzeichnet, dass der Querschnitt der Siebtrommel ein Achteck ist, dass die Staueinrichtungen (12) jeweils aus vier Rechteckblechen (15) bestehen, deren eine Seite (15b) gleich der Breite der Achteckseite und deren andere Seite (15a) gleich der Kathetenlänge des rechtwinkligen, gleichschenkligen Dreiecks über der Achteckseite ist, dass die Rechteckbleche (15) in einer Ebene derart angeordnet sind, dass in der Mitte der Siebtrommel eine quadratische Durchtrittsöffnung (17) freigelassen ist, und dass die Aufprallbleche (18) in den Staustrecken (13 und 14) zwischen den Staueinrichtungen (12) schraubenlinienförmig versetzt so angeordnet sind, dass der niedrigere Teil der Drehrichtung vorausläuft.

2. Siebtrommel nach Anspruch 1, dadurch gekennzeichnet, dass die Oberkante der Aufprallbleche (18) eine Sägeblattkontur (19) aufweist.

3. Siebtrommel nach Anspruch 1 oder 2, dadurch gekennzeichnet, dass die Teilungsabstände der etwa zwei Schraubenwindungen ergebenden Reihe von Aufprallblechen (18) gleich der doppelten Breite der Achteckseite sind.

4. Siebtrommel nach einem der Ansprüche 1-3, dadurch gekennzeichnet, dass die Länge der Aufprallbleche (18) gleich der halben Breite der Achteckseite und die Höhe gleich einem Viertel der Achteckseite ist.

## Claims

1. Screen drum for refuse with triangular impact sheets (18) which are arranged radially on the inner side of the drum, for the preliminary comminution of the refuse and with at least one baffle mechanism (12) arranged in the interior of the drum, characterized in that the cross-section of the screen drum is an octagon, that the baffle mechanisms (12) in each case consist of four rectangular sheets (15), one side (15b) of which is equal to the width of the octagon side and the other side (15a) of which is equal to the short side lenght of the right-angled, isosceles triangle over the octagon side, that the rectangular sheets (15) are arranged in a plane such that in the centre of the screen drum a square through opening (17) is left free, and that the impact sheets (18) are arranged in the baffling areas (13 and 14) between the baffle mechanisms (12) staggered in a spiral shape such that the lower part runs ahead of the direction of rotation.

2. Screen drum according to Claim 1, characterized in that the upper edge of the impact sheets (18) has a saw blade contour (19).

3. Screen drum according to Claim 1 or 2, characterized in that the division spaces of the row of impact sheets (18) producing approximately two spiral turns, are equal to twice the width of the octagon side.

4. Screen drum according to one of Claims 1-3, characterized in that the lengh of the impact sheets (18) is equal to half the width of the octagon side and the height is equal to a quarter of the octagon side.

## Revendications

1. Tambour tamiseur pour des ordures ménagères, du type comprenant des tôles d'impact (18) triangulaires disposées radialement sur la face interne du tambour pour une fragmentation préliminaire des ordures, et au moins un dispositif de barrage (12) disposé à l'intérieur du tambour, caractérisé en ce que la section transversale du tambour de tamisage est octogonale, en ce que les dispositifs de barrage (12) sont constitués, chacun, de quatre tôles rectangulaires (15), dont un côté (15b) est de même largeur que celle du côté de l'octogone et dont l'autre côté (15a) est de même longueur que celle des côtés de l'angle droit du triangle rectangle isocèle sur le côté de l'octogone, en ce que les tôles rectangulaires (15) sont disposées dans un plan, de telle sorte qu'une ouverture de passage carrée (17) est laissée libre au milieu du tambour tamiseur, et en ce que les tôles d'impact (18) sont disposées, dans les intervalles de barrage (13 et 14) entre les dispositifs de barrage (12), décalées en forme d'hélice, de telle sorte que la partie la plus basse s'étend dans la direction de rotation.

2. Tambour selon le revendication 1, caractérisé en ce que le bord supérieur des tôles d'impact (18) présente un contour en lame de scie.

3. Tambour selon la revendication 1 ou la revendication 2, caractérisé en ce que les intervalles de séparation des rangées de tôles d'impact (18), constituant à peu près deux spires, représentent deux fois la largeur du côté de l'octogone.

4. Tambour selon l'une quelconque des revendications 1 à 3, caractérisé en ce que la longueur des tôles d'impact (18) représente la moitié de la largeur du côté de l'octogone et leur hauteur le quart du côté de l'octogone.

Fig. 1

0 070 292

Fig. 2

Fig. 3

0 070 292